# EUROPEAN PATENT APPLICATION

(11) **EP 4 822 388 A1**
(43) Date of publication of application: **14.10.2026**
(21) Application number: 26170025.6
(22) Date of filing: 31.03.2026
(51) Int. Cl.: G01S 7/35, G01S 7/41, G01S 13/34, G01S 13/536, G01S 13/58

(54) **RADAR METHOD AND SYSTEM FOR DETECTING TARGETS AT DIFFERENT SPEEDS**

(30) Priority: 08.04.2025 IT 202500007689
(71) Applicant: Inxpect S.p.A., 25131 Brescia (BS) (IT)
(72) Inventor: Belotti Cassa, Michele, 25131 Brescia BS (IT)
(74) Representative: Perani & Partners S.p.A.

(57) **Abstract**

A method for radar detection of targets at different speeds comprises transmitting cyclically radar chirps (1), grouped into transmission frames (2), receiving respective echo signals, and obtaining detection profiles (3) by processing combinations of echo signals with the respective transmitted chirps (1). For each transmission frame (2), fast targets are detected by means of processing of the detection profiles (3) of the transmission frame (2). A virtual frame (4) is cyclically identified as a grouping of detection profiles (3). For this grouping, a set of elected transmission frames (2a) is selected, and a single detection profile (3) is stored in the grouping for each elected frame (2a). Then, slow targets are detected by processing the detection profiles (3) of the virtual frame (4).

## Description

### Technical Field

The present invention is developed in the technical field of detecting targets by means of radar, especially human targets that can perform micromovements such as vital signs, in particular for applications such as personnel safety in an industrial environment.

### State of the Art

The use of radar to detect fixed or mobile targets in an environment is known. Inside a closed place, in most applications it is preferred to detect only the moving targets, because a certain number of fixed targets, such as the walls of a room and any fixed objects, for example furniture, would be detected continuously.

In some applications it is useful to distinguish an inanimate fixed object from a semi-stationary living body, such as a person who does not move but who performs micromovements related to his or her vital signs (such as breathing, shifting weight from one leg to the other...). For example, in the field of personnel safety, in certain situations it is necessary to verify that no human is present in a potentially dangerous area.

### Problem of the Prior Art

The need to detect very slow targets is difficult to reconcile with the need to correctly track the movement of relatively fast targets. The performance in detecting fast targets is expressed by the parameter of the maximum unambiguous velocity, beyond which a target, between two successive detection cycles, moves so fast as to falsify the detection of its angle or to not allow the radar to understand if it is the same target detected in the two cycles.

The performance in detecting slow targets is expressed by the parameter of the doppler resolution, which expresses the minimum velocity that is recognized by the radar, below which the target is considered stationary, and therefore may escape detection.

In many radars, especially MIMO (multiple input, multiple output) radars, the detection cycles are usually organized in successive frames, where each frame contains a series of chirps transmitted in sequence. The grouping of multiple chirps in a frame allows for comparing and/or combining successive chirps (in the frequency domain) to obtain advantageous effects such as reducing noise (for example by averaging the signals of multiple chirps) or to identify and replace single chirps affected by interference (by identifying discrepancies with respect to other chirps of the frame) or to distinguish mobile targets from stationary targets (by comparing single chirps with their average within the frame).

In order to detect fast targets, the chirps must be temporally close to each other. This prevents a target from moving too far between two consecutive chirps. For example, considering a radar operating at a frequency in a band around 60 GHz, a maximum unambiguous velocity of 2 m/s can be obtained with a chirp repetition interval of about 500 µs.

The same radar, in order to detect slow targets, for example with a doppler resolution of 1 mm/s, must use very long frames, for example of at least 2.5 seconds. This would mean including at least 5000 chirps in each frame.

All of these chirps would have to be stored in memory until the end of the frame to allow for its overall processing. This, however, involves a very high computational and memory load, which in many applications is not tolerable.

To reduce the memory used, it is already known that, during the processing phase, after sampling the baseband signal and its conversion into a detection profile, that expresses the signal intensity as a function of the position, the sampled signal can be deleted from the memory and only the detection profile can be stored. This, however, is not sufficient to manage frames with such a high number of chirps, considering that each detection profile in turn contains numerous signal intensity values.

### Summary of the invention

The purpose of the present invention is to allow a radar device to increase the accuracy of detection of both fast and slow targets, while limiting the computational load and the memory resources used.

This and other purposes are achieved by a method and a system for the radar detection of targets at different speeds according to any one of the appended claims.

The invention provides that normal detection profiles originating from chirps and frames of a known type are used to detect fast targets, and that therefore the temporal distance between the chirps can be selected based on the desired maximum unambiguous velocity. In order to detect slow targets, and to increase the doppler resolution, some of the detection profiles obtained are grouped into a virtual frame. The grouping is obtained by selecting a set of elected transmission frames, and storing in the grouping, for each elected transmission frame, a single detection profile. This detection profile can simply be one of the detection profiles of the elected transmission frame, or a combination of multiple detection profiles of the elected transmission frame, for example their average.

In this way, the virtual frame can have a significant duration without excessively increasing the number of chirps that compose it. Therefore, by detecting targets from the virtual frame, a high doppler resolution is obtained, which allows identifying even semi-stationary targets, without an excessive computational and memory load.

Further features and advantages of the invention will be recognizable to a person skilled in the art from the following detailed description of exemplary embodiments of the invention.

### Brief description of the figures

For a better understanding of the following detailed description, some embodiments of the invention are illustrated in the accompanying drawings, in which:
- figure 1 schematically shows the transmission of radar signal chirps grouped into transmission frames, and the collection of suitable detection profiles in a virtual frame, in accordance with an embodiment of the invention,
- figure 2 shows a variant of figure 1, in which groups of detection profiles of each transmission frame are combined to originate new detection profiles for the virtual frame, and
- figure 3 shows a variant of figure 1, in which the detection profiles for the virtual frame are selected from elected frames alternating with non-elected frames.

### DETAILED DESCRIPTION

A radar system and a method for the radar detection of targets at different speeds in an environment are described herein.

In a known manner, the radar system comprises a set of antennas configured to transmit the radar signal chirps 1 into the environment and receive the respective radar echo signals.

Preferably, the set of antennas is collected in a single device, more preferably in a single circuit, in particular in a single chip.

The set of antennas can comprise transceiver antennas, which are used both to transmit and to receive the signal, or, in the preferred embodiments, distinct antennas for the transmission and reception of the signal.

In an embodiment, the radar system is a MIMO radar system, comprising a plurality of transmission antennas and a plurality of reception antennas, arranged according to a predefined spatial distribution. An example arrangement is a matrix arrangement organized with a plurality of rows and a plurality of columns.

In the preferred example, instead, a single row of transmission antennas and a single column of reception antennas is included. As is known, this arrangement is substantially equivalent to a matrix arrangement, but it uses a reduced number of antennas, taking advantage of the fact that the signal from each transmission antenna can be received simultaneously by multiple reception antennas, and the signal thus processed is equivalent to that of a single transceiver antenna at the midpoint between each pair of transmission and reception antennas. In this description, the rows and columns are intended as transverse to each other, preferably perpendicular to each other, but with no preference for horizontal, vertical, or oblique orientations.

In other embodiments, the transmission and reception antennas can be on a single row, or parallel rows; or (in a SIMO embodiment), a single transmission antenna and a plurality of reception antennas (on a row or a matrix) can be provided, or (in a MISO embodiment) a single reception antenna and a plurality of transmission antennas (on a row or a matrix).

The radar system then comprises a control system. In this description, with control system it is intended in a broad sense an assembly of components that can operate partly in analog and partly in digital, to control the functioning of the antennas, provide them with the signal to be transmitted, condition the signal they receive, digitally acquire at least one analog signal related to the radar echo signal, and process the acquired signal in such a way as to identify and locate the targets that have reflected the radar signal in the environment.

The method of the invention provides for cyclically transmitting chirps of radar signals 1 in an environment, in particular in a field of view of the radar system, by means of the one or more transmission antennas. In this description, by chirp of a radar signal 1 it is intended a signal with a predetermined duration and a modulated frequency, for example an FMCW (frequency-modulated continuous wave) radar signal with linear frequency modulation over time. The transmission of the chirps 1 is shown in the figures by means of frequency-time graphs.

The method then comprises receiving at least one respective radar echo signal for each transmitted chirp 1. In fact, as already described with reference to the antennas, each single transmitted signal can be received simultaneously by multiple reception antennas. The echo signal is a signal originating from reflections of the transmitted signal in the environment, on any solid body, stationary or in motion, in the field of view.

The transmitted chirps 1 are grouped in a sequence of transmission frames 2 (in the figures the general reference of the transmission frames 2 has not been used, but only references for the specific examples of transmission frames 2a, 2b, 2c, 2d described below). Each transmission frame 2 is identified by a plurality of consecutive chirps 1. In the presence of multiple transmission antennas, each single transmission antenna transmits a plurality of chirps 1 within the frame.

Within each transmission frame 2, the chirps 1 are temporally spaced from each other by a first pause time 5, which determines the maximum unambiguous velocity. It should also be noted that, in the preferred embodiments, the transmission antennas do not transmit simultaneously to avoid signal interference. These are therefore embodiments in which the interferences are mitigated with a technique called time division multiplexing, while in other embodiments the transmission can also be simultaneous, provided that different frequencies or in any case clearly distinguishable signals are used for the different transmissions, as known to those skilled in the art. Instead, the consecutive transmission frames 2 are temporally spaced from each other by a second pause time 6, usually greater than the first pause time 5.

The control system uses the transmitted and received signals to obtain, for each transmission frame 2, a plurality of detection profiles 3, shown schematically in the figures below the respective chirps. It should be noted that, in a simplified way, the generation of one detection profile for each transmitted chirp 1 has been assumed, although, as described elsewhere, multiple chirps 1 from multiple antennas can be used to generate a single 2D or 3D detection profile 3, and/or for each single transmitted chirp 1, echo signals can be received from multiple antennas, generating multiple detection profiles. Some detection profiles or their groups are crossed out to indicate that they have been deleted from memory, as will be detailed further below.

By detection profile 3 it is intended a set of signal intensities as a function of a set of positional coordinates in the environment. In different embodiments, a signal profile as a function of only the distance from the radar system, or a two- or three-dimensional signal map, usually obtained from a plurality of distance signal profiles, can be used as a detection profile 3.

Each distance profile, and therefore ultimately each detection profile 3, can be obtained in a known manner starting from the processing of a predetermined combination of an echo signal with the respective transmitted chirp 1, which are temporally overlapped. In particular, the echo signal can be converted to baseband, preferably by mixing with the transmitted chirp 1. Then, the baseband signal is sampled, acquiring for each chirp 1 a plurality of samples of the baseband signal. The distance profile is then obtained from the baseband signal, for example by means of a Fourier transform (preferably FFT, fast fourier transform). As mentioned, the detection profile 3 can coincide with the distance profile thus obtained, or it can be a known combination of multiple distance profiles.

After obtaining each detection profile 3 from a respective transmitted chirp 1 and a respective echo signal, it is possible to delete from a memory the sampled values of the baseband signal.

To perform these operations, the control system can include known components such as one or more voltage-controlled oscillators VCO to control the transmission antennas, one or more analog conditioning circuits to convert the received echo signals to baseband, one or more analog-to-digital converters ADC configured to sample the baseband signals, and at least one processor (and at least one memory) to derive the detection profiles 3 from the sampled signals and to perform other processing described below.

Thus, for each transmission frame 2, a plurality of detection profiles 3 are obtained, which can be relative to different pairs of transmission and reception antennas (from time to time, the transmission antenna that transmitted the chirp 1 and the reception antenna that received the echo signal), but they also include multiple detection profiles 3 for each pair of transmission and reception antennas.

In a known manner, the normal detection of targets, which distinguishes between mobile targets and fixed targets, provides for comparing the detection profile of one or more chirps 1, based on the signal of a certain set of antennas, with a combination, for example an average, of the reference profiles 3 of multiple chirps of the frame 2 of the same set of antennas.

According to the invention, in addition to this collection of detection profiles 3 for each transmission frame 2, corresponding to a sequence of consecutive chirps 1, an analogous collection of detection profiles 3 is created in a virtual frame 4, corresponding to an assembly of generally non-consecutive chirps 1.

The virtual frame 4 in particular is a grouping of stored detection profiles 3, each relating to a distinct transmission frame 2. It should be noted that not all transmission frames 2 are necessarily taken into consideration. Therefore, a set of elected transmission frames 2a is first selected.

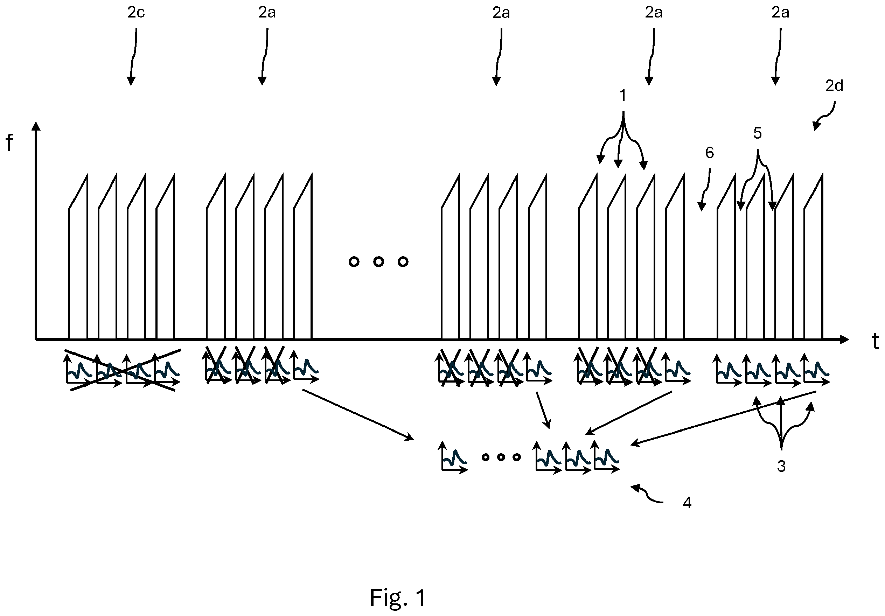

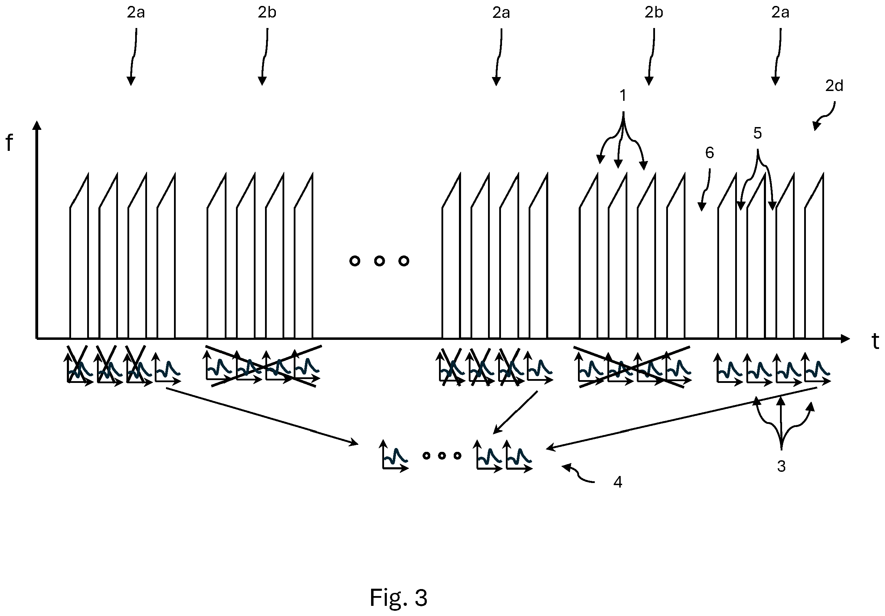

In one embodiment, shown in figure 1, the elected transmission frames 2a can be a predetermined number of consecutive frames. In another embodiment, the elected transmission frames 2a can be a predetermined number of transmission frames 2 interspersed with non-elected transmission frames 2b. In this case, each elected transmission frame 2a can be alternated with a single non-elected frame 2b, as in figure 3, or each single elected transmission frame 2a is alternated with a fixed number of non-elected transmission frames 2b, which can also be a fixed number greater than one.

The selection of the elected frames 2a also determines the number of detection profiles 3 stored for the virtual frame 4, which can be equal to or different from the number of detection profiles 3 (and therefore of chirps 1) of each transmission frame 2.

With these examples of construction of the virtual frame 4, the overall duration of the virtual frame 4, intended as the temporal distance between the first and the last chirp 1 that are used to obtain the detection profiles 3 stored in the virtual frame 4, and along which all the chirps 1 used for such detection profiles 3 are distributed, is greater than the duration of each transmission frame 2. Preferably, all transmission frames 2 have a common time duration, and the overall time duration of the virtual frame 4 is a multiple of the common time duration of the transmission frames 2.

For example, if there are no non-elected frames 2b interspersed with the elected frames 2a, the overall time duration of the virtual frame 4 is substantially equal to the duration of a single transmission frame 2 multiplied by the number of elected frames 2a. In the presence of non-elected frames 2b alternating with the elected frames 2a, the overall duration becomes even greater.

Preferably, the overall time duration of the virtual frame 4 is at least two seconds, for example 2.5 seconds.

It should be noted that, considering a fixed number of transmission frames 2, the virtual frame 4 will be cyclically updated by eliminating detection profiles 3 relating to more temporally remote transmission frames 2c, to add detection profiles 3 relating to more recent transmission frames 2d. The elimination of the remote frames 2c is shown in figure 1, where all the detection profiles 3 of the most remote frame 2c have been deleted from memory. The most recent frame 2d is instead recognizable in the figures as all its detection profiles 3 have not yet been deleted from memory.

In other words, after identifying a previous virtual frame 4 with a first set of elected transmission frames 2a, a subsequent virtual frame 4 is identified with a second set of elected transmission frames 2a. The second set of elected transmission frames 2a is selected by removing from the first set of elected transmission frames 2a a temporally remote subset 2c of transmission frames 2, and by adding thereto one or more recent transmission frames 2d, posterior to the first set of elected transmission frames 2a.

As visible in figure 1, the temporally remote subset 2c of transmission frames 2 is a proper subset of the first set of elected transmission frames 2a, smaller than it. Therefore, while the temporally remote subset 2c is removed, a proximate subset 2e of transmission frames 2 of the first set of elected transmission frames 2a is preserved. The second set of elected transmission frames 2a will be composed of said proximate subset 2e of transmission frames 2 of the first set of elected transmission frames 2a, and by the one or more recent transmission frames 2d that have been added.

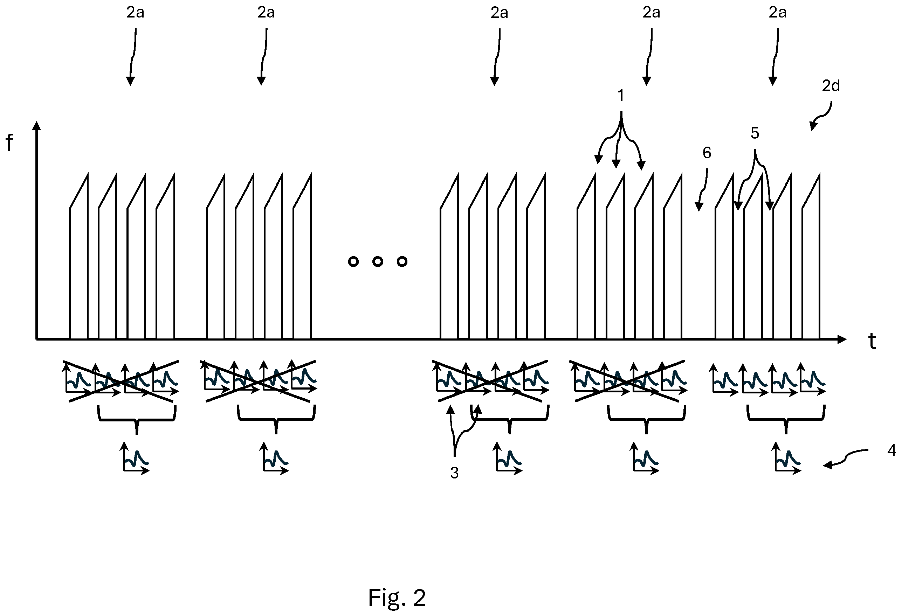

As anticipated, in the virtual frame 4 a single detection profile 3 is stored for each elected transmission frame 2a. This stored detection profile 3 in some embodiments coincides with a specific detection profile 3 of the elected frame 2a in question, for example in figures 1 and 3 the last detection profile 3 of each elected frame 2a has been chosen. In other embodiments, the detection profile 3 that is stored is a combination of multiple detection profiles 3 of the elected transmission frame 2a, for example their average. In this combination, all the detection profiles 3 of the transmission frame 2 can be considered, or a subset thereof, as visible in figure 2 where the last three detection profiles 3 of each elected frame 2a are combined.

In this description, when speaking of combinations, averages or moving averages between multiple starting profiles, which result in a resulting profile, operations are intended that leave the number of signal intensity values of the profiles substantially unchanged. For example, in the case of an average between multiple detection profiles 3, the resulting profile will have, for each position of the set of positional coordinates, a signal value equal to the average of those signal values that the starting detection profiles 3 assume at the considered position.

Having available the detection profiles 3 of a transmission frame 2 and of a virtual frame 4, the control system can proceed with the detection of targets with different speeds by operating on the two different types of frames.

In particular, for each transmission frame 2, the control system detects targets that move with relatively high speeds, in a first speed range, by means of a first predetermined processing of the detection profiles 3 of the transmission frame 2. Furthermore, the control system detects targets that move with relatively low speeds, in a second speed range, by means of a second predetermined processing of the detection profiles 3 of the virtual frame 4.

In general, the detection of targets based on the virtual frame 4 has intrinsically a better doppler resolution (i.e., it reaches lower speeds) than the detection of targets based on a single transmission frame 2. Therefore, the second speed range includes slower speeds than the first speed range, including preferably speeds representative of vital signs of targets. The two intervals, however, are not necessarily disjoint, but may overlap for at least some intermediate speeds.

Preferably, while the detection profiles 3 of each transmission frame 2 are obtained during the transmission frame 2 itself, for example in the first pause times 5 between consecutive chirps 1, the first predetermined processing with the detection of fast targets can be performed at the conclusion of the detection frame, for example in the second pause times 6 between consecutive transmission frames 2.

Similarly, the second predetermined processing, with the detection of slow targets, can be performed at the conclusion of each elected frame 2a for which a new detection profile 3 is added to the virtual frame 4, for example always in the second pause times 6.

Advantageously, to perform the second predetermined processing and detect the slow targets, it is sufficient to keep in memory the detection profiles 3 of the virtual frame 4 and not all the detection profiles 3 of all the transmission frames 2 that occupy a duration corresponding to that of the virtual frame 4. Instead, the detection profiles 3 of the transmission frames 2 are stored until, at the conclusion of the transmission frame 2, the first predetermined processing is performed to detect the fast targets, and then they can be deleted (at least those detection profiles 3 that are not in any case kept in memory for the virtual frame 4).

Instead, the detection profiles 3 that had been stored for the virtual frame 4 can be deleted from memory when the relative transmission frames 2 are removed from the set of elected transmission frames 2a, as they belong to the aforementioned temporally remote subset 2c of transmission frames 2. As visible in figure 2, where the stored profiles 3 for the virtual frame 4 do not coincide with any of the profiles 3 of the transmission frames 2, being a combination of multiple profiles 3 of the transmission frames 2, it is possible to delete all the profiles 3 of the transmission frames 2 that are not the current transmission frame 2.

Therefore, the detection profiles 3 in memory are only those relating to the most recent detection frame 2, for example the one still in progress, and the detection profiles 3 stored for the virtual frame 4.

The first and the second predetermined processing of the detection profiles 3 of the virtual frame 4 and of the transmission frames 2 can be of a known type and in some embodiments they are the same type of processing (except for possibly operating on a different number of detection profiles 3). The first processing, for example, can be the one already described for the purpose of distinguishing mobile targets from fixed targets.

In the case where different types of processing are performed for the first and the second predetermined processing, considering that the first speed range corresponds substantially to the speeds normally detected by known radars, it is preferable to use any known type of first predetermined processing, even different from the one already described, and a particular type of second predetermined processing, similar to the first processing already described.

The second predetermined processing, for example, can involve combining the detection profiles 3 of the virtual frame 4 into an average reference profile, for example by means of an arithmetic average (it should be noted that the intensities of the detection profiles 3 can be numbers with complex values, and therefore the arithmetic average can also be in the domain of complex numbers). Subsequently, one proceeds by checking whether, for at least one position of the set of coordinates, one or more detection profiles 3 of the virtual frame 4 deviate from the average reference profile, for a deviation greater than a predetermined threshold.

Alternatively, the deviation from the average reference profile may not be verified for each of the detection profiles 3 of the virtual frame 4, but for combinations of multiple detection profiles 3 of the virtual frame 4. These combinations, for example, can be calculated as moving averages of multiple detection profiles 3 of the virtual frame 4. Then, one proceeds to verify whether, for at least one position of the set of coordinates, one or more moving averages deviate from the average reference profile, for a deviation greater than the predetermined threshold.

As was described above, the set of positional coordinates of each detection profile 3 can be a one-dimensional set (distances from the radar) or a two- or three-dimensional set of coordinates (in which at least one coordinate among azimuth and elevation angles is added to the distance). In some embodiments, therefore, the first and second predetermined processing already operate on two- or three-dimensional sets of coordinates. In other embodiments, despite using MIMO, SIMO or MISO radars, intrinsically capable of detecting target angles, the first and second predetermined processing can be performed on one-dimensional profiles, to bring out the targets separately in the two speed ranges, while the target angle can be estimated downstream of these operations.

Obviously, a person skilled in the art may make numerous equivalent modifications to the variants described above, without thereby departing from the scope of protection defined by the appended claims.

## Claims

1. Method for radar detection of targets at different speeds comprising:
- cyclically transmitting chirps (1) of radar signals in an environment, wherein the chirps (1) are grouped into a sequence of transmission frames (2), each transmission frame (2) comprising a plurality of consecutive chirps (1), temporally spaced from each other by a first pause time (5), consecutive transmission frames (2) being temporally spaced from each other by a second pause time (6),
- for each transmitted chirp (1), receiving at least one respective echo radar signal,
- for each transmission frame (2), obtaining a plurality of detection profiles (3), wherein obtaining each detection profile (3) comprises processing a predetermined combination of an echo signal with the respective transmitted chirp (1), each detection profile (3) comprising a set of signal intensities as a function of a set of positional coordinates in the environment,
- for each transmission frame (2), detecting targets moving with speed in a first speed range, by means of a first predetermined processing of the detection profiles (3) of the transmission frame (2),
- cyclically identifying a virtual frame (4) as a predetermined grouping of stored detection profiles (3), the grouping being obtained by selecting a set of elected transmission frames (2a), and storing in the grouping, for each elected transmission frame (2a), a single detection profile (3) given by a detection profile (3) of the elected transmission frame (2a), or given by a combination of multiple detection profiles (3) of the elected transmission frame (2a),
- detecting targets moving with speed in a second speed range, which includes slower speeds than the first speed range, by means of a second predetermined processing of the detection profiles (3) of the virtual frame (4),
wherein cyclically identifying a virtual frame (4) comprises, after identifying a previous virtual frame (4) with a first set of elected transmission frames (2a), identifying a subsequent virtual frame (4) with a second set of elected transmission frames (2a),
**characterized in that:**
- the second set of elected transmission frames (2a) is selected by removing from the first set of elected transmission frames (2a) a remote subset (2c) of transmission frames (2), smaller than the first set of elected transmission frames (2a), and by adding thereto one or more recent transmission frames (2d), which follow the first set of elected transmission frames (2a).

2. Method according to claim 1, wherein the detection profiles (3) of the virtual frame (4) originate from transmitted chirps (1) distributed over an overall time duration greater than a duration of each transmission frame (2), preferably the transmission frames (2) all having a common time duration, more preferably the overall time duration of the virtual frame (4) being a multiple of the common time duration of the transmission frames (2), the overall time duration of the virtual frame (4) preferably being at least two seconds.

3. Method according to claim 1 or 2, wherein, for each virtual frame (4), the elected transmission frames (2a) are all consecutive to each other, or are interspersed with a plurality of unelected transmission frames (2b), optionally wherein each single elected transmission frame (2a) is alternated with a fixed number of unelected transmission frames (2b), in particular one or more unelected transmission frames (2b).

4. Method according to any one of claims 1 to 3, wherein the second set of elected transmission frames (2a) is composed by a proximal subset (2e) of transmission frames (2) of the first set of transmission frames (2a), and by the one or more recent transmission frames (2d) which have been added.

5. Method according to any one of claims 1 to 4, wherein detecting targets by means of said second predetermined processing comprises:
- combining the detection profiles (3) of the virtual frame (4) into an average reference profile, and
- checking whether, for at least one position of the coordinate set, one or more detection profiles (3) of the virtual frame (4), or combinations thereof, deviate from the average reference profile, for a deviation greater than a predetermined threshold,
preferably wherein the second speed range includes speeds representative of target vital signs.

6. Method according to claim 5, wherein checking the deviation comprises:
- calculating, as combinations of the detection profiles (3), a plurality of moving averages of the detection profiles (3) of the virtual frame (4), and
- checking whether for at least one position of the set of coordinates, one or more moving averages deviate from the average reference profile, for a deviation greater than the predetermined threshold.

7. Method according to any one of claims 1 to 6, comprising, at the conclusion of each transmission frame (2), after detecting targets in the first speed range, deleting from a memory each detection profile (3) of the transmission frame (2) that is not stored in the virtual frame (4).

8. Method according to any one of claims 1 to 7, comprising, upon obtaining each detection profile (3) from a respective transmitted chirp (1) and a respective echo signal, deleting from a memory sampled values of said predetermined combination of the transmitted chirp (1) with the echo signal.

9. Radar system for radar detection of targets at different speeds, configured to perform the steps of the method according to any one of claims 1 to 8, comprising:
- a set of antennas configured to transmit the chirps (1) of radar signals into the environment and receive the respective echo radar signals, and
- a control system configured to obtain the detection profiles (3), detect the targets with speed in the first speed range, identify the virtual frames (4), and detect the targets with speed in the second speed range.

10. Radar system according to claim 9, wherein the set of antennas is a MIMO, SIMO or MISO set of antennas, and is configured to transmit the chirps of radar signals 1 of FMCW-type.
